# FASCICULE DE BREVET EUROPEEN

(11) **EP 1 947 160 B1**
(45) Date de publication et mention de la délivrance du brevet: **22.08.2012**
(21) Numéro de dépôt: 07291402.1
(22) Date de dépôt: 26.11.2007
(51) Int. Cl.: C10J 3/00, C10L 5/44, C10G 1/06, C10G 1/00, C10G 2/00

(54) **Procédé de conversion de biomasse pour la production de gaz de synthèse**
Verfahren zur Umwandlung der Biomasse für die Synthesegasproduktion
Biomass conversion method for the production of synthetic gas

(30) Priorité: 20.12.2006 FR 0611235
(43) Date de publication de la demande: 23.07.2008
(73) Titulaire: IFP Energies nouvelles, 92852 Rueil-Malmaison Cedex (FR)
(72) Inventeur: Lenglet, Eric, 92500 Rueil Malmaison (FR)

(56) Documents cités:
- EP-A- 1 449 907
- EP-A- 2 009 353
- WO-A-93/05126
- WO-A-96/41070
- FR-A- 2 893 033
- US-A1- 2004 123 519
- US-A1- 2005 097 814
- US-A1- 2006 123 698

## Description

L'invention concerne la valorisation de biomasse lignocellulosique, notamment de bois et déchets végétaux, typiquement pour la production de biocarburants, et éventuellement la production ou coproduction de combustibles liquides et/ou d'hydrogène, voire de produits chimiques comme du méthanol.

Plus particulièrement, la présente invention concerne un procédé de conversion d'une charge contenant de la matière fibreuse lignocellulosique, en mélange avec une coupe hydrocarbonée, en vue de produire une suspension fine de solide pouvant alimenter une unité de gazéification pour la production d'un gaz de synthèse.

Le gaz de synthèse est par définition un mélange contenant principalement du monoxyde de carbone et de l'hydrogène (à plus de 50% molaire pour l'ensemble de ces deux composants, hors H2O, et souvent à plus de 90%, voire 99% molaire de CO + H2 dans le gaz sec). il peut éventuellement comprendre également une quantité limitée de gaz carbonique, si l'on recherche la production de méthanol en aval.

Le gaz de synthèse permet de produire, par réaction de synthèse chimique, des fractions liquides telles que des coupes hydrocarbures, notamment une coupe naphta et une coupe gazole, et/ou des fractions oléfiniques au moyen de la synthèse Fischer-Tropsch. Il permet également de produire diverses bases chimiques ou de carburants alternatifs, par exemple du méthanol ou du diméthyléther.

Par extension on appelle aussi gaz de synthèse, selon l'invention, un mélange comprenant plus de 50% molaire de mélange hydrogène + oxyde de carbone (hors H2O) qui est destiné à la production d'hydrogène, ou bien à des applications énergétiques telles qu'un combustible pour turbine à gaz.

La présente invention n'est donc pas liée à une utilisation particulière du gaz de synthèse.

Cependant, une des applications les plus importantes de la présente invention se situe dans la chaîne de production d'hydrocarbures de synthèse par la réaction de Fischer-tropsch, notamment de fractions naphta (base pétrochimique d'hydrocarbures bouillant typiquement en dessous de 200°C environ) et plus particulièrement de gazole de haute qualité.

De tels produits de haute qualité peuvent selon l'invention être produits à partir d'une matière première constituée au moins en partie de biomasse de type lignocellulosique dont un exemple typique est des copeaux de bois. L'invention peut cependant être mise en oeuvre pour tout type de biomasse ligno-cellulosique.

Quelques exemples non limitatifs de matière biomasse lignocellulosique sont donnés ci dessous:
- Résidus d'exploitation agricole (paille, bagasse de canne à sucre ou tout autre type de résidus ligneux...);
- Résidus d'exploitation forestière (produits résultants de la première éclaircie des forêts);
- Produits de l'exploitation forestière;
- Résidus de scieries;
- Cultures dédiées ( par exemple taillis à courte rotation );

### EXAMEN DE L'ART ANTERIEUR

L'homme du métier connaît déjà des procédés de thermolyse, ou pyrolyse de déchets et/ou de liquéfaction de biomasse lignocellulosique. Ces procédés opèrent à des températures supérieures à 250°C et pouvant aller jusqu'à 600°C pour obtenir un solide résiduel et la production d'un gaz de thermolyse et souvent d'au moins une phase liquide aqueuse et/ou organique, souvent appelée "bio-oil" dans la terminologie anglo-saxonne, ce qui signifie huile (d'origine) biologique. Les temps de séjour utilisés varient d'une seconde à quelques minutes pour la pyrolyse rapide, et peuvent aller de quelques minutes jusqu'à une heure voire plus pour la pyrolyse lente ou la liquéfaction. Le procédé selon l'invention se rapporte plus particulièrement aux procédés de thermolyse (ou pyrolyse, les deux termes pouvant être utilisés indépendamment) dans la mesure ou le produit obtenu est solide à plus de 50%, voire 90% poids alors qu'il est majoritairement voire essentiellement liquide dans les procédés de liquéfaction.

Les technologies adaptées à la thermolyse sont variées et peuvent utiliser notamment un lit fluidisé de sable chaud, pour un contact direct ou indirect.

Il a également été proposé l'utilisation d'un dispositif à vis ou double vis avec chauffage direct ou indirect, par exemple par un lit fluidisé de sable chaud. Ces technologies sont relativement complexes dans leur mise en oeuvre.

Le brevet FR 2 678 850 de la demanderesse décrit un four de pyrolyse tournant à double enveloppe adapté au traitement des déchets d'ordure ménagère, pouvant comporter de la biomasse.

Dans la demande de brevet non publiée FR 06/07.049 de la demanderesse (publiée sous nº FR 2904405), on décrit une "torréfaction" de copeaux de bois dans un four tournant à double enveloppe, préalablement à leur broyage fin pour alimenter typiquement une unité de gazéification en lit entraîné.

Ce procédé décrit la mise en oeuvre d'une thermolyse douce, ou torréfaction, qui modifie la structure de la biomasse de telle manière que les opérations ultérieures de broyage s'en trouvent facilitées. Le four de pyrolyse utilisé est un four tournant à double enveloppe, technologie qui est également relativement délicate du point de vue de sa mise en oeuvre.

Il demeure donc nécessaire de proposer une technologie de traitement thermique de biomasse ligno-cellulosique qui soit simple et fiable dans sa mise en oeuvre.
Les demande de brevet US 2004/0123519 et WO 96/41070 décrivent des procédés et dispositifs de traitement thermique de biomasse ligno-cellulosique.

L'homme du métier connaît par ailleurs déjà des procédés pour la réalisation d'étapes complémentaires que sont l'oxydation partielle d'une part et la conversion Fischer-Tropsch d'autre part :
L'art antérieur décrit la production de gaz de synthèse par oxydation partielle de matière carbonée lourde. On pourra notamment se référer à l'ouvrage de référence: "Le raffinage du pétrole, Procédés de transformation, P Leprince, Editions Technip, Paris, 1998", pages 492 à 509. Cet ouvrage décrit également des traitements de purification du gaz de synthèse en amont de la conversion Fischer-Tropsch, par exemple le procédé Rectisol de lavage au méthanol froid.
L'étape de conversion Fischer-Tropsch peut être réalisée de diverses façons selon l'une quelconque des technologies de réacteurs et procédés connus, utilisant l'un quelconque des catalyseurs connus, notamment à base de fer ou de cobalt. Elle est typiquement réalisée avec un catalyseur adapté au rapport H2/CO du gaz de synthèse produit. Par exemple on peut typiquement utiliser un catalyseur au cobalt pour un gaz de synthèse de rapport H2/CO compris entre environ 1,8 et 2,5 , ou bien un catalyseur au fer pour un gaz de synthèse de rapport H2/CO compris par exemple entre environ 1,2 et 2, sans que ces valeurs soient limitatives.

Au niveau de la technologie du réacteur Fischer-Tropsch, on peut notamment utiliser un réacteur en lit fixe triphasique, ou bien un réacteur en "slurry" selon la terminologie anglo-saxonne, c'est-à-dire un réacteur triphasique avec une phase liquide comprenant un catalyseur solide divisé en suspension et une phase gazeuse (ici, le gaz de synthèse, mélange d'H2 et de CO). Le catalyseur Fischer-Tropsch peut être mis en oeuvre sous forme de fines particules en suspension comprenant un support inerte imprégné de fer ou de cobalt. On peut par exemple utiliser un support en alumine ou silice, ou zircone, ou silice-alumine, ou alumine-zircone, imprégné par 10% à 30% poids de fer ou de cobalt par rapport au catalyseur global. Le mélange triphasique peut comprendre des particules de catalyseur de diamètre moyen compris entre 3 et 150 micromètres, de préférence 10 à 120 micromètres, en suspension dans un liquide essentiellement composé par des produits de la réaction, en particulier des cires paraffiniques fondues à la température de réaction. Le pourcentage poids de catalyseur peut être compris généralement entre 10% et 40% poids par rapport à la suspension liquide/catalyseur solide. La vitesse superficielle gaz dans le réacteur peut être comprise entre 0,05 m/s et 0,4 m/s, notamment entre 0,12 et 0,3 m/s. La pression est souvent comprise entre 1,5 et 4 MPa, notamment entre 1,8 et 2,8 MPa. La température est souvent comprise entre 215°C et 255°C, généralement entre 230°C et 240°C. On pourra notamment pour plus de détails concernant des catalyseurs et/ou procédés Fischer-Tropsch se référer aux brevets ou demandes de brevet: EP 450 860; US 5,961,933; US 6,060,524; US 6,921,778; PCT/FR05/02.863 (publiée sous nº WO 2006/067285).

La conversion Fischer-Tropsch permet ainsi de tranformer la plus grande partie du gaz de synthèse en fractions liquides.
On traite alors typiquement les effluents Fischer-Tropsch pour les convertir en produits finis commerciaux : gaz de pétrole liquéfié, naphta, kérosène, et une quantité majoritaire de gazole à haut indice de cétane. Pour ce faire, outre le fractionnement nécessaire des effluents, on réalise typiquement un hydrocraquage isomérisant HDKI des cires (paraffines longues solides à l'ambiante), et souvent également des fractions bouillant au dessus de 150°C à 200°C, les fractions les plus légères étant hydro-isomérisées, et non pas craquées.

### DESCRIPTION SOMMAIRE DE L'INVENTION

La présente invention concerne un procédé de transformation de matière carbonée lourde comprenant de la biomasse ligno-cellulosique en vue notamment de sa conversion en gaz de synthèse par gazéification. On réalise un traitement en au moins 2 étapes, la première étant une maturation de la biomasse sous forme de fragments grossiers mélangés avec au moins un liquide organique, et la seconde un broyage fin de la biomasse en présence de liquide (typiquement une coupe hydrocarbonée, éventuellement avec des particules solides en suspension) pour former une suspension de particules de très faible dimension caractéristique.

L'étape de maturation est réalisée à une température comprise entre 250°C et 320°C pendant un temps de résidence d'au moins 10 minutes, pour obtenir un mélange de fragments solides traités thermiquement mélangés dans un liquide, et le plus souvent un gaz qui se dégage au cours de l'étape de maturation. La quantité de gaz est très variable en fonction de la biomasse de départ, mais reste minoritaire et le plus souvent faible. Il peut aussi y avoir éventuellement une transformation partielle, généralement faible, voire nulle, de la phase solide en une ou plusieurs phases liquides (bio-oil).

On a trouvé que cette étape de maturation en phase liquide (les copeaux, ou fragments de biomasse étant dispersés dans la phase liquide) conduit à rendre friable les fragments après maturation, rendant très facile leur broyage fin ultérieur, pour former une suspension de très petites particules. L'étape de broyage fin est considérablement facilitée par l'étape de maturation qui permet de réduire la consommation énergétique d'au moins 60 % par rapport à un broyage sans maturation préalable.

L'enchaînement d'une maturation douce de fragments grossiers en phase liquide, puis d'un broyage fin des fragments fragilisés par cette maturation permet de préparer de façon particulièrement simple et fiable une suspension adéquate pour l'alimentation d'une unité de gazéification.

La présente invention concerne également un dispositif pour la mise en oeuvre du procédé précité.

### DESCRIPTION DETAILLEE DE L'INVENTION

L'invention propose ainsi un procédé de transformation de matière carbonée lourde comprenant de la biomasse ligno-cellulosique, dans lequel:
a) on introduit un courant de la biomasse sous forme de fragments solides initiaux de dimension caractéristique comprise entre 1 et 20 mm dans un liquide L1 comprenant plus de 60% poids de carbone et d'hydrogène pour obtenir un mélange polyphasique comprenant au moins un mélange liquide/solide,
b) on soumet ce mélange liquide/solide à une étape de maturation à une température comprise entre 250°C et 320°C pendant un temps de résidence d'au moins 10 minutes, pour obtenir un mélange de fragments solides traités thermiquement dans un liquide L2, et optionnellement un gaz G2;
c) on réalise un broyage desdits fragments solides traités thermiquement en mélange avec une fraction au moins de L2 pour obtenir une suspension de solide sous forme divisée de dimension caractéristique inférieure à 150 micromètres;
d) on soumet une fraction au moins de ladite suspension de solide sous forme divisée à une oxydation partielle POX en lit entraîné, pour la production d'un gaz de synthèse SG.

Le liquide L1 dans lequel est introduit la biomasse est typiquement un liquide hydrocarboné (ce terme n'excluant pas la présence d'hétéroatomes, par exemple d'oygène, d'azote etc... tel que du liquide obtenu à partir de biomasse), et en général un liquide hydrocarboné lourd. Il comprend de préférence l'une des coupes suivantes ou un mélange formé à partir de l'une de ces coupes:
- un résidu sous vide pétrolier,
- une fraction bouillant au dessus de 200°C provenant d'une unité de craquage catalytique (typiquement de distillat sous vide ou de résidu atmosphérique), notamment une fraction aromatique appelée LCO ("Light Cycle Oil" en anglais ce qui signifie huile aromatique légère), ou HCO ("Heavy Cycle Oil" en anglais, ce qui signifie huile aromatique lourde),
- une fraction de L2 comprenant un liquide issu d'une éventuelle liquéfaction partielle de la biomasse au cours de l'étape b),

Le mélange polyphasique de départ (avant maturation) peut aussi comprendre, optionnellement, des particules de coke et/ou de charbon et/ou un courant de recyclage de la suspension de solide sous forme divisée obtenue (à l'étape c)).

La suspension soumise ultérieurement à la gazéification peut donc être gazéifiée en totalité: Outre le solide divisé obtenu, le liquide de la suspension est également gazéifiable et il n'y a pas d'eau à vaporiser, ce qui conduit à une consommation énergétique limitée.
Le liquide L2 est typiquement le liquide obtenu après maturation, et comprend les produits liquides éventuellement issus du traitement de maturation. Il peut être sensiblement identique au liquide initial L1, en particulier si L1 est une fraction recyclée de L2, ou s'il n'y a qu'une conversion très faible de la biomasse en produits liquides, selon la biomasse utilisée et les conditions opératoires. Cette conversion en liquides est typiquement inférieure à 50% poids, souvent à 20% poids, et le plus souvent à 10% poids.
Généralement on ne réalise d'ailleurs pas l'étape de maturation sur des fragments végétaux bruts, par exemple sur du bois vert, mais on réalise avant l'étape a) d'introduction de la biomasse sous forme de fragments solides initiaux dans le liquide L1 les étapes suivantes:
- une étape de broyage ou déchiquetage préliminaire de la biomasse en fragments initiaux de dimension caractéristique comprise entre 1 et 20 mm, puis:

- une étape de séchage préliminaire de ces fragments initiaux réalisée à une température généralement inférieure à 250°C.
Ce séchage permet en effet d'éliminer en amont la plus grande partie de l'eau contenue dans la biomasse, cette élimination d'eau conduisant également à une amélioration des performances, grâce à une consommation énergétique limitée.

L'étape b) de maturation peut être réalisée avec un temps de séjour compris typiquement entre 10 et 40 minutes dans la plage de température 250°C à 320°C. Ceci permet d'obtenir une désagrégation partielle de la lignocellulose, rendant fragiles les fragments solides après maturation. Le broyage ultérieur fin (100 micromètres ou moins typiquement) en est grandement facilité.

De préférence, on réalise l'étape b) de maturation à une température comprise entre 270°C et 300°C avec un temps de séjour compris entre 15 et 30 minutes. La pression utilisée est typiquement modérée, par exemple comprise entre 0,1 et 1 MPa.

Le chauffage de la charge, nécessaire à l'étape b) de maturation, et l'étape de maturation elle-même peuvent être réalisées de différentes façons. On peut notamment faire circuler le mélange liquide/solide dans un serpentin chauffé. On peut aussi, selon une variante caractéristique préférée de l'invention, réaliser la maturation dans au moins une capacité comprenant un agitateur mécanique pour le brassage du mélange liquide/solide.

Selon un mode de réalisation préféré, l'étape b) est réalisée dans au moins une capacité chauffée par circulation en boucle fermée d'un courant principalement liquide prélevé dans la capacité, chauffé extérieurement, puis réintroduit dans cette capacité. Ceci permet de chauffer un flux circulant principalement liquide, ce qui est plus facile à mettre en oeuvre qu'un chauffage du mélange global liquide/solide. On peut collecter le liquide en partie supérieure de la capacité, et/ou réaliser une filtration grossière pour éviter d'entraîner des copeaux de grande dimension. Typiquement, on prélève ledit courant principalement liquide à un niveau suffisamment élevé de ladite capacité pour que le mélange polyphasique à ce niveau soit sensiblement exempt de fragments solides de dimension supérieure à 5 mm.

De façon préférée, on utilise au moins 2, et par exemple de 2 à 4 capacités alimentées alternativement, de façon discontinue, pour assurer un temps de maturation sensiblement uniforme pour tous les fragments solides initiaux de biomasse. On peut ainsi alimenter une quantité prédéfinie de liquide dans la première capacité, puis une quantité également prédéterminée de copeaux (fragments initiaux séchés) dans des conditions permettant un brassage, par exemple au moyen d'un agitateur mécanique rotatif. On chauffe alors typiquement le mélange liquide/solide à la température de maturation requise, par circulation externe d'un flux circulant principalement liquide chauffé à l'extérieur de la première capacité. La circulation peut être éventuellement interrompue après obtention de la température désirée, et le mélange liquide/solide maintenu sensiblement à cette température pendant la durée de maturation prévue.

On peut alternativement continuer à chauffer le mélange, et par exemple réaliser une maturation avec un profil de température croissant. Après maturation, le mélange est évacué de la première capacité.

En variante, on peut préchauffer le liquide L1 avant l'introduction des fragments initiaux de biomasse, typiquement à une température supérieure à la température de maturation, de façon à obtenir la température voulue de mélange après introduction de la biomasse. Cette température est légèrement supérieure à la température finale de maturation, compte tenu d'une légère endothermicité des réactions se produisant au cours de l'étape de maturation et des pertes thermiques. Selon cette variante, il n'est plus nécessaire de chauffer un liquide ayant été au contact de la biomasse.

L'utilisation de plusieurs capacités de maturation alimentées séquentiellement permet de rendre le procédé plus continu, voire continu au niveau de l'alimentation de la biomasse.

Pendant la phase de maturation dans la première capacité, on peut notamment alimenter de façon analogue la deuxième capacité, ou plusieurs autres capacités séquentiellement. Ainsi, on peut obtenir une alimentation continue ou semi-continue de copeaux séchés vers les capacités de maturation.

On a trouvé également, selon une autre disposition optionnelle, qu'il pouvait être avantageux de réaliser un stripage du mélange liquide/solide au cours de la maturation au moyen d'un gaz, par exemple de l'azote en boucle ouverte ou en boucle fermée avec condensation des vapeurs récupérées et recyclage, pour obtenir un séchage complémentaire des fragments solides traités thermiquement et obtenir de préférence une teneur en eau résiduelle de ces fragments inférieure à 5% poids. Ceci permet de réaliser une économie d'énergie au niveau de l'oxydation partielle typiquement réalisée en aval, en réduisant le besoin en oxygène (moins d'eau à évaporer).

En sortie d'étape de maturation b), on réalise à l'étape c) un broyage du solide résiduel en mélange avec une fraction au moins de L2 pour obtenir une suspension de solide résiduel sous forme divisée de dimension caractéristique inférieure typiquement à 100 micromètres comprenant généralement de 30% à 75%, et typiquement de 40% à 70% poids de particules solides. Cette étape est de mise en oeuvre facile du fait de la fragilisation du solide obtenue par la maturation.

On réalise alors une étape d) d'oxydation partielle POX à l'oxygène, à une température comprise le plus souvent entre 1250°C et 1400 °C. Le gaz de synthèse SG obtenu, après purification selon des procédés conventionnels et adjonction éventuelle d'hydrogène pour adapter le rapport H2/CO à la valeur voulue, est alors typiquement converti en hydrocarbures dans une étape subséquente e) de conversion par la réaction de Fischer-Tropsch.

On peut aussi ne convertir qu'une partie de SG en hydrocarbures, et utiliser la fraction complémentaire de SG pour produire de l'hydrogène. cet hydrogène peut être ajouté à la fraction de SG convertie en hydrocarbures, pour l'ajustement du rapport H2/CO et/ou pour fournir l'hydrogène nécessaire à une étape d'hydrocraquage isomérisant des hydrocarbures lourds (cires) obtenus lors de l'étape e).

L'invention concerne également un dispositif pour la mise en oeuvre du procédé précité comprenant :
- un moyen d'alimentation de matière carbonée lourde comprenant de la biomasse ligno-cellulosique dans un moyen de broyage ou déchiquetage de cette biomasse sous forme de fragments solides initiaux de dimension caractéristique comprise entre 1 et 20 mm, relié à :
- un moyen DRY de séchage au moins partiel de ces fragments solides initiaux, relié à:
- un moyen d'introduction de ces fragments solides initiaux séchés au moins partiellement dans un réservoir de stockage, relié par un aiguillage à 3 voies à deux capacités de maturation,
- des moyens d'introduction dans chacune de ces capacités d'un liquide L1 comprenant plus de 60% poids de carbone et d'hydrogène,
- des moyens de mélange de L1 avec ces fragments solides initiaux séchés au moins partiellement pour l'obtention d'un mélange polyphasique comprenant au moins un mélange liquide/solide,
- pour chacune des capacités de maturation, des moyens de circulation en boucle fermée d'un courant principalement liquide prélevé dans la capacité, chauffé extérieurement par des moyens de chauffage, puis réintroduit dans cette capacité, pour le maintien du mélange liquide/solide à une température comprise entre 250°C et 320°C pendant un temps de résidence d'au moins 10 minutes, pour l'obtention d'un mélange de fragments solides traités thermiquement dans un liquide L2, et optionnellement un gaz G2,
- des moyens MILL de broyage des fragments solides traités thermiquement en mélange avec une fraction au moins de L2 pour obtenir une suspension de solide sous forme divisée de dimension caractéristique inférieure à 150 micromètres, et
- des moyens d'oxydation partielle POX en lit entraîné d'une fraction au moins de ladite suspension de solide sous forme divisée, pour la production d'un gaz de synthèse SG.

### DESCRIPTION DE LA FIGURE ET DU MEILLEUR MODE DE REALISATION:

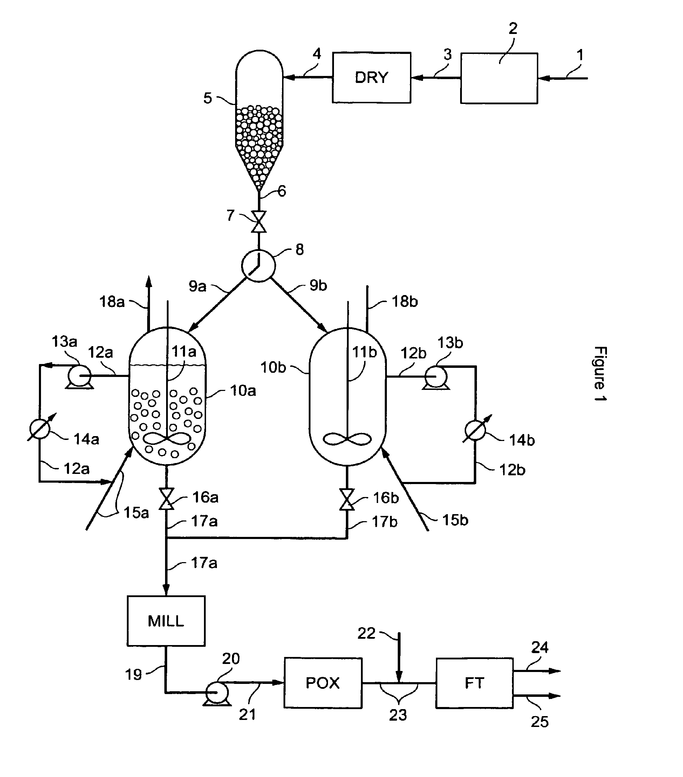

L'invention sera mieux comprise à la lecture de la description ci-après qui décrit le fonctionnement d'une installation pour la mise en oeuvre du procédé selon l'invention selon un mode de réalisation préféré représenté schématiquement sur la figure 1 unique annexée.

La biomasse, par exemple du bois est alimentée par la ligne 1 pour son broyage ou déchiquetage grossier dans l'unité 2. On peut utiliser diverses techniques de réduction de taille, par sciage, broyage à lames, déchiquetage etc... permettant d'obtenir une dimension moyenne de fragments (copeaux de bois par exemple) comprise entre 1 et 20 mm, et de préférence entre 4 et 15 mm. Par définition, la dimension caractéristique est la taille de sphères du même matériau ayant le même rapport surface/volume que la matière divisée considérée. Les fragments initiaux ou copeaux sont ensuite acheminés via la ligne 3 vers l'unité DRY de séchage convectif à air chaud, typiquement de l'air chauffé à 150°C à 200°C, puis acheminés via la ligne 4 vers un silo de stockage 5. On peut utiliser tout type connu de moyen de transport des fragments de biomasse (par exemple un transporteur à bande, à vis, un élévateur vibrant, un transporteur pneumatique etc.... De même on peut utiliser tout type connu de séchoir, par exemple un séchoir à tapis, un four tournant, un séchoir à cyclone etc... Les copeaux stockés dans le silo 5 ont typiquement une teneur en eau comprise entre 6% et 20% poids, le plus souvent entre 8% et 15% poids, par exemple de 10% poids.

Les copeaux (fragments initiaux) sont évacués par la ligne 6 comprenant une vanne 7, puis alimentés via un aiguillage 8 vers l'une ou l'autre des capacités 10_{A} et 10_{B}. La figure 1 représente la configuration où les copeaux sont envoyés vers la capacité 10_{A} via la ligne 9_{A}.

La capacité10_{A} est équipée d'une ligne 15_{A} d'alimentation d'un liquide L1, par exemple une coupe aromatique lourde, d'un agitateur 11_{A}, et d'une boucle de recirculation 12_{A} comprenant une pompe de recirculation 13_{A} et un échangeur de chaleur 14_{A}.

La capacité 10_{A} est alimentée séquentiellement en copeaux et fonctionne de la façon suivante: On alimente préalablement la capacité par un volume de liquide L1 suffisant pour contenir une quantité prédéterminée de copeaux à alimenter ultérieurement. L1 est par exemple un résidu sous vide pétrolier ou une coupe lourde de craquage catalytique, dite "HCO" (pour Heavy Cycle Oil, ce qui signifie Huile lourde aromatique). L1 est alimenté de préférence à une température correspondant à la température de maturation voulue, par exemple 300°C. On introduit alors une la quantité prédéterminée de copeaux en ouvrant la vanne 7 et en orientant l'aiguillage 8 vers la capacité 10_{A}. L'homme du métier pourra aisément utiliser des moyens conventionnels pour assurer le transfert des copeaux en quantité adéquate, tels qu'une vis d'extraction, des moyens de pesage du silo 5, ou de repérage du niveau de liquide dans la capacité 10_{A}, l'augmentation de ce niveau étant directement lié au volume de copeaux introduits. Cette introduction de copeaux est réalisée sous agitation mécanique du mélange liquide/solide : L1/copeaux, pour assurer une dispersion des copeaux et éviter un bouchage. On met alors en service une recirculation de liquide L1 via la boucle de recirculation 12_{A}. Le point de prélèvement de liquide recirculé est situé à un niveau suffisamment élevé de la capacité pour que le liquide L1 soit sensiblement exempt, à ce niveau, de copeaux grossiers de dimension supérieure à 5 mm, afin d'éviter des risques de bouchage dans la ligne de recirculation. On peut aussi installer un filtre à ce niveau. La boucle de recirculation permet de réchauffer le liquide L1, qui a été en partie refroidi par l'introduction des copeaux, à la température voulue pour la maturation recherchée, par exemple à 300°C sous une pression de 0,1 à 0,2 MPa. Les copeaux, mélangés à L1 sont alors maintenus pendant la durée de maturation voulue, par exemple 20 minutes, puis évacués de la capacité, en mélange avec le liquide, via la ligne 17_{A} et la vanne 16_{A}. on pourra également utiliser des moyens conventionnels pour faciliter le transfert du mélange, par exemple une vis d'extraction etc... A la fin du traitement de maturation, en fonction de la biomasse utilisée, le liquide L2 pourra être soit sensiblement identique à L1, soit modifié par l'incorporation d'une fraction d'huile produite par une conversion partielle de la biomasse au cours du traitement de maturation. Cette dernière éventualité se produit surtout si la biomasse comprend des produits verts plus facilement dégradables.

L'étape de maturation de la biomasse elle même génère aussi des composés qui se retrouvent en partie ou en totalité dans le flux gazeux qui est extrait de la capacité par la ligne 18_{A} , comprenant notamment de l'eau, du dioxyde de carbone, du monoxyde de carbone, et une grande variété de composés organiques oxygénés (tels que méthanol, acide formique, acide lactique, furfural, hydroxyl acétone).

On peut aussi introduire pendant la phase de maturation, via la ligne 15_{A}, un gaz de stripage, par exemple de l'azote, pour assurer un séchage complémentaire des copeaux traités thermiquement. Dans ce gaz le gaz de stripage est aussi évacué par la ligne 18_{A}.

On a trouvé que ce séchage complémentaire augmentait la réactivité chimique de la biomasse dans la gazéification aval, et réduisait la quantité d'oxygène nécessaire.

L'installation de la figure 1 comprend également une autre capacité de maturation 10_{B} équipée des mêmes éléments respectifs que ceux de la capacité 10_{A} , mais référencés avec l'indice B, soit 11_{B}, 12_{B} , 13_{B} , 14_{B} , 15_{B} , 16_{B} , 17_{B} , 18_{B}. La capacité de maturation 10_{B} opère en fonctionnement décalé par rapport à celui de la capacité 10_{A}. Elle peut par exemple être en phase de maturation lorsque 10_{A} est en phase de chargement. L'alimentation en copeaux à partir du silo de stockage 5 est discontinue: soit vers la capacité 10_{A}, soit vers la capacité 10_{B}, soit l'alimentation est interrompue.

Le mélange liquide L2/copeaux traités thermiquement issu des capacités 10_{A} et 10_{B} est envoyé dans l'unité MILL de broyage pour obtenir une suspension fine de particules carbonées de dimension caractéristique inférieure à 100 micromètres, par exemple d'environ 50 micromètres. Ce broyage fin final est obtenu facilement du fait de la désagrégation partielle des composés de lignine et de cellulose. Il peut être réalisé dans de nombreux types de broyeurs: broyeur à boulets, à lames, etc....

Un excès de liquide L2 est optionnellement évacué avant broyage, par exemple à partir des capacités 10_{A} et 10_{B} par exemple via les lignes 15_{A} , 15_{B} , pour obtenir le taux de solide voulu dans la suspension fine issue du broyeur. Cette suspension est évacuée par la ligne 19, pompée par la pompe 20, puis alimente via la ligne 21 une unité POX de gazéification à l'oxygène en lit entraîné. La suspension est atomisée à la vapeur dans un brûleur alimenté par un courant d'oxygène additionné de vapeur d'eau et est gazéifiée typiquement à une température de 1400°C sous une pression de 2 MPa.

Après purification, élimination d'eau résiduelle et de CO2, par exemple par lavage avec une solution d'éthanolamines et/ou un lavage au méthanol à basse température, on obtient un gaz de synthèse SG qui est envoyé via la ligne 23 dans une unité FT de conversion Fischer-Tropsch. On récupère alors les effluents de Fischer-Tropsch pour la production, après hydroisomérisation et hydrocraquage des fractions lourdes, typiquement d'une petite quantité de naphta évacuée par la ligne 24 et d'un courant principal de gazole à haut indice de cétane évacué par la ligne 25. Le gaz de synthèse, avant son alimentation dans l'unité FT est optionnellement additionné par un courant d'hydrogène, ou d'un gaz riche en hydrogène de rapport H2/CO supérieur à 3, alimenté via la ligne 22, pour ajuster le rapport H2/CO du gaz de synthèse à celui nécessaire à la réaction de Fischer-Tropsch. Ce rapport peut être par exemple voisin de 2,1 si l'on utilise un catalyseur au cobalt.

L'invention permet, avec une mise en oeuvre très simple et fiable, de préparer de la biomasse ligno-cellulosique pour permettre sa conversion en biocarburants, en particulier en gazole de haute qualité.

## Revendications

1. Procédé de transformation de matière carbonée lourde comprenant de la biomasse ligno-cellulosique, dans lequel:
a) on introduit un courant de ladite biomasse sous forme de fragments solides initiaux de dimension caractéristique comprise entre 1 et 20 mm dans un liquide L1 comprenant plus de 60% poids de carbone et d'hydrogène pour obtenir un mélange polyphasique comprenant au moins un mélange liquide/solide;
b) l'on soumet ce mélange liquide/solide à une étape de maturation à une température comprise entre 250°C et 320°C pendant un temps de résidence d'au moins 10 minutes, pour obtenir un mélange de fragments solides traités thermiquement dans un liquide L2, et optionnellement un gaz G2;
c) on réalise un broyage desdits fragments solides traités thermiquement en mélange avec une fraction au moins de L2 pour obtenir une suspension de solide sous forme divisée de dimension caractéristique inférieure à 150 micromètres;
d) on soumet une fraction au moins de ladite suspension de solide sous forme divisée à une oxydation partielle POX en lit entraîné, pour la production d'un gaz de synthèse SG.

2. Procédé selon la revendication 1 dans lequel L1 comprend l'une des coupes suivantes ou un mélange formé à partir de l'une de ces coupes:
- un résidu sous vide pétrolier,
- une fraction bouillant au dessus de 200°C provenant d'une unité de craquage catalytique,
- une fraction de L2 comprenant un liquide issu d'une liquéfaction partielle de la biomasse au cours de l'étape b),
ledit mélange polyphasique comprenant optionnellement en outre des particules de coke et/ou de charbon et/ou un courant de recyclage de ladite suspension de solide sous forme divisée.

3. Procédé selon l'une des revendications précédentes comprenant en outre au moins les étapes suivantes, avant l'étape a) d'introduction de ladite biomasse sous forme de fragments solides initiaux dans ledit liquide L1:
- une étape de broyage ou déchiquetage de ladite biomasse en fragments initiaux de dimension caractéristique comprise entre 1 et 20 mm, puis:
- une étape de séchage préliminaire de ces fragments initiaux réalisée à une température inférieure à 250°C.

4. Procédé selon l'une des revendications précédentes dans lequel l'étape b) de maturation est réalisée avec un temps de séjour compris entre 10 et 40 minutes.

5. Procédé selon la revendication 4 dans lequel l'étape b) de maturation est réalisée à une température comprise entre 270°C et 300°C avec un temps de séjour compris entre 15 et 30 minutes.

6. Procédé selon l'une des revendications précédentes dans lequel l'étape b) de maturation est réalisée dans au moins une capacité comprenant un agitateur mécanique pour le brassage dudit mélange liquide/solide.

7. Procédé selon l'une des revendications précédentes dans lequel l'étape b) est réalisée dans au moins une capacité chauffée par circulation en boucle fermée d'un courant principalement liquide prélevé dans la capacité, chauffé extérieurement, puis réintroduit dans cette capacité.

8. Procédé selon la revendication 7 dans lequel on prélève ledit courant principalement liquide à un niveau suffisamment élevé de ladite capacité pour que le mélange polyphasique à ce niveau soit sensiblement exempt de fragments solides de dimension supérieure à 5 mm.

9. Procédé selon l'une des revendications 6 à 8, dans lequel on utilise au moins 2 capacités alimentées alternativement, de façon discontinue, pour assurer un temps de maturation sensiblement uniforme pour tous les fragments solides initiaux de biomasse.

10. Procédé selon l'une des revendications précédentes dans lequel on réalise un stripage dudit mélange liquide/solide au cours de la maturation au moyen d'un gaz différent de la vapeur d'eau pour obtenir un séchage complémentaire des fragments solides traités thermiquement et obtenir de préférence une teneur en eau résiduelle de ces fragments inférieure à 5% poids.

11. Procédé selon l'une des revendications précédentes dans lequel on réalise à l'étape c) un broyage du solide résiduel en mélange avec une fraction au moins de L2 pour obtenir une suspension de solide résiduel sous forme divisée de dimension caractéristique inférieure à 100 micromètres comprenant de 40% à 70% poids de particules solides.

12. Procédé selon l'une des revendications précédentes dans lequel on réalise à l'étape d) une oxydation partielle POX à l'oxygène, à une température comprise entre 1250°C et 1400 °C.

13. Procédé selon l'une des revendications précédentes dans lequel on réalise une étape subséquente e) de conversion d'une partie au moins du gaz de synthèse SG en hydrocarbures par la réaction de Fischer-Tropsch.

14. Dispositif pour la mise en oeuvre du procédé selon l'une des revendications précédentes, comprenant :
- un moyen (2) d'alimentation de matière carbonée lourde comprenant de la biomasse ligno-cellulosique dans un moyen de broyage ou déchiquetage de ladite biomasse sous forme de fragments solides initiaux de dimension caractéristique comprise entre 1 et 20 mm, relié à :
- un moyen (DRY) de séchage au moins partiel de ces fragments solides initiaux, relié à:
- un moyen (4) d'introduction de ces fragments solides initiaux séchés au moins partiellement dans un réservoir de stockage (5), relié par un aiguillage à 3 voies (8) à deux capacités de maturation (10a, 10b),
- des moyens (15a, 15b) d'introduction dans chacune de ces capacités d'un liquide L1 comprenant plus de 60% poids de carbone et d'hydrogène,
- des moyens (11a, 11b) de mélange de L1 avec ces fragments solides initiaux séchés au moins partiellement pour l'obtention d'un mélange polyphasique comprenant au moins un mélange liquide/solide,
- pour chacune desdites capacités de maturation (10a, 10b), des moyens (12a, 13a ou 12b, 13b) de circulation en boucle fermée d'un courant principalement liquide prélevé dans la capacité, chauffé extérieurement par des moyens (14a ou 14b) de chauffage, puis réintroduit dans cette capacité, pour le maintien dudit mélange liquide/solide à une température comprise entre 250°C et 320°C pendant un temps de résidence d'au moins 10 minutes, pour l'obtention d'un mélange de fragments solides traités thermiquement dans un liquide L2, et optionnellement un gaz G2,
- des moyens (MILL) de broyage desdits fragments solides traités thermiquement en mélange avec une fraction au moins de L2 pour obtenir une suspension de solide sous forme divisée de dimension caractéristique inférieure à 150 micromètres, et
- des moyens d'oxydation partielle (POX) en lit entraîné d'une fraction au moins de ladite suspension de solide sous forme divisée, pour la production d'un gaz de synthèse SG.

## Claims

1. A process for transforming heavy carbonaceous material comprising lignocellulosic biomass, wherein:
a) a stream of said biomass in the form of initial solid fragments with a characteristic dimension in the range 1 to 20 mm is introduced into a liquid L 1 comprising more than 60% by weight of carbon and hydrogen to obtain a polyphase mixture comprising at least one liquid/solid mixture;
b) said liquid/solid mixture undergoes a maturation step at a temperature in the range 250°C to 320°C for a residence time of at least 10 minutes, to obtain a mixture of solid heat-treated fragments in a liquid L2, and optionally a gas G2;
c) said solid heat-treated fragments mixed with at least a fraction of L2 are milled to obtain a suspension of solid in the divided form with a characteristic dimension of less than 150 micrometres;
d) at least a fraction of said solid suspension in the divided form undergoes partial entrained bed oxidation POX to produce a synthesis gas SG.

2. A process according to claim 1, wherein L1 comprises one of the following cuts or a mixture formed from one of said cuts:
• a vacuum residue from oil;
• a fraction boiling above 200°C deriving from a catalytic cracking unit;
• a fraction of L2 comprising a liquid derived from partial liquefaction of the biomass during step b);
said polyphase mixture optionally further including particles of coke and/or coal and/or a recycle stream of said suspension of solid in the divided form.

3. A process according to one of the preceding claims, further comprising at least the following steps before step a) for introducing said biomass in the form of initial solid fragments into the liquid L1:
• a step for preliminary milling or shredding of said biomass into initial fragments with a characteristic dimension in the range 1 to 20 mm; then
• a step for preliminary drying of said initial fragments carried out at a temperature below 250°C.

4. A process according to one of the preceding claims, wherein maturation step b) is carried out with a residence time in the range 10 to 40 minutes.

5. A process according to claim 4, wherein maturation step b) is carried out at a temperature in the range 270°C to 300°C with a residence time in the range 15 to 30 minutes.

6. A process according to one of the preceding claims, wherein maturation step b) is carried out in at least one volume comprising a mechanical agitator to stir said liquid/solid mixture.

7. A process according to one of the preceding claims, wherein step b) is carried out in at least one volume heated by closed loop circulation of a principally liquid stream removed from the volume, heated externally then re-introduced into said volume.

8. A process according to claim 7, wherein said principally liquid stream is removed from a sufficiently high level in said capacity for the polyphase mixture at that level to be substantially free of solid fragments with a dimension of more than 5 mm.

9. A process according to one of claims 6 to 8, wherein at least two volumes are used which are supplied alternately, in a discontinuous manner to provide a substantially uniform maturation time for all initial solid fragments of biomass.

10. A process according to one of the preceding claims, wherein said liquid/solid mixture is stripped during maturation using a gas which is other than steam to obtain complementary drying of the heat-treated solid fragments and preferably to obtain a residual water content in said fragments of less than 5% by weight.

11. A process according to one of the preceding claims, wherein in step c) the residual solid mixed with at least a fraction of L2 is milled to obtain a suspension of residual solid in the divided form with a characteristic dimension below 100 micrometres comprising 40% to 70% by weight of solid particles.

12. A process according to one of the preceding claims, wherein step d) for partial oxidation POX using oxygen is carried out at a temperature in the range 1250°C to 1400°C.

13. A process according to one of the preceding claims, wherein a subsequent step e) is carried out for converting at least a portion of the synthesis gas SG into hydrocarbons using the Fischer-Tropsch reaction.

14. A device for carrying out the process according to one of the preceding claims, comprising:
• a means (2) for supplying heavy carbonaceous material comprising lignocellulosic biomass to a means for milling or shredding said biomass into the form of initial solid fragments with a characteristic dimension in the range 1 to 20 mm, connected to:
• a means (DRY) for at least partially drying said initial solid fragments, connected to:
• a means (4) for introducing at least part of said dried initial solid fragments into a storage reservoir (5), connected via a three-way diverter valve (8) to two maturation volumes (10a, 10b);
• means (15a, 15b) for introducing a liquid L1 comprising more than 60% by weight of carbon and hydrogen into each of said volumes;
• means (11a, 11b) for mixing L1 with at least part of said dried initial solid fragments to obtain a polyphase mixture comprising at least one liquid/solid mixture;
• for each of said maturation volumes (10a, 10b), means (12a, 13a or 12b, 13b) for closed loop circulation of a principally liquid stream removed from the volume, for heating externally by heating means (14a or 14b), then for reintroduction into said volume, to maintain said liquid/solid mixture at a temperature in the range 250°C to 320°C for a residence time of at least 10 minutes, to obtain a mixture of heat-treated solid fragments in a liquid L2 and optionally a gas G2;
• means (MILL) for milling said heat-treated solid fragments mixed with at least a fraction of L2 to obtain a suspension of solid in the divided form with a characteristic dimension of less than 150 micrometres; and
• entrained bed means (POX) for partial oxidation of at least a fraction of said suspension of solid in the divided form to produce a synthesis gas SG.

## Patentansprüche

1. Verfahren zur Umwandlung von schwerem kohlenstoffhaltigem Material, das lignozellulosehaltige Biomasse umfasst, wobei:
a) ein Strom der Biomasse in Form von festen Ausgangsfragmenten mit einer charakteristischen Abmessung im Bereich zwischen 1 und 20 mm in eine Flüssigkeit L1 eingeführt wird, die mehr als 60 Gew.-% Kohlenstoff und Wasserstoff umfasst, um ein mehrphasiges Gemisch zu erhalten, das mindestens ein Flüssig-Fest-Gemisch umfasst;
b) dieses Flüssig-Fest-Gemisch einem Schritt zur Reifung bei einer Temperatur im Bereich zwischen 250 °C und 320 °C während einer Verweildauer von mindestens 10 Minuten unterzogen wird, um ein Gemisch aus wärmebehandelten festen Fragmenten in einer Flüssigkeit L2 und gegebenenfalls ein Gas G2 zu erhalten;
c) die wärmebehandelten festen Fragmente im Gemisch mit einer Fraktion aus mindestens L2 gemahlen werden, um eine Suspension aus Feststoff in verteilter Form mit einer charakteristischen Abmessung von weniger als 150 Mikrometern zu erhalten;
d) mindestens eine Fraktion der Suspension aus Feststoff in verteilter Form einer Teiloxidation POX im Flugstromreaktor unterzogen wird, um ein Synthesegas SG zu produzieren.

2. Verfahren nach Anspruch 1, wobei L1 einen der folgenden Schnitte oder ein Gemisch, das aus einem dieser Schnitte gebildet wird, umfasst:
- einen Vakuumrückstand aus Öl,
- eine Fraktion, die oberhalb von 200 °C siedet, die aus einer katalytisch arbeitenden Krackeinheit stammt,
- eine Fraktion L2, die eine Flüssigkeit umfasst, die aus einer teilweisen Verflüssigung der Biomasse im Verlauf von Schritt b) entstanden ist,
wobei das mehrphasige Gemisch gegebenenfalls ferner Kokspartikel und/oder Kohlepartikel und/oder einen Rückführungsstrom der Suspension aus Feststoff in verteilter Form umfasst.

3. Verfahren nach einem der vorhergehenden Ansprüche, das, vor dem Schritt a), ferner mindestens die folgenden Schritte zur Einführung der Biomasse in Form von festen Ausgangsfragmenten in die Flüssigkeit L1, umfasst:
- einen Schritt zum Mahlen oder Zerkleinern der Biomasse in Ausgangsfragmente mit einer charakteristischen Abmessung im Bereich zwischen 1 und 20 mm, dann:
- einen Schritt des vorausgehenden Trocknens dieser Ausgangsfragmente, das bei einer Temperatur von weniger als 250 °C durchgeführt wird.

4. Verfahren nach einem der vorhergehenden Ansprüche, wobei Schritt b) zur Reifung mit einer Verweildauer im Bereich zwischen 10 und 40 Minuten durchgeführt wird.

5. Verfahren nach Anspruch 4, wobei Schritt b) zur Reifung bei einer Temperatur im Bereich zwischen 270 °C und 300 °C mit einer Verweildauer im Bereich zwischen 15 und 30 Minuten durchgeführt wird.

6. Verfahren nach einem der vorhergehenden Ansprüche, wobei Schritt b) zur Reifung in mindestens einem Gefäß durchgeführt wird, das einen mechanischen Rührer zum Durchrühren des Flüssig-Fest-Gemischs umfasst.

7. Verfahren nach einem der vorhergehenden Ansprüche, wobei Schritt b) in mindestens einem Behälter durchgeführt wird, der durch Umlauf im geschlossenen Kreis eines im Wesentlichen flüssigen Stroms erwärmt wird, der aus dem Behälter entnommen, extern erwärmt, dann wieder in dieses Gefäß eingeführt wird.

8. Verfahren nach Anspruch 7, wobei der im Wesentlichen flüssige Strom in einer ausreichend großen Höhe des Behälters entnommen wird, damit das mehrphasige Gemisch in dieser Höhe im Wesentlichen frei von festen Fragmenten mit Abmessungen von mehr als 5 mm.

9. Verfahren nach einem der Ansprüche 6 bis 8, wobei mindestens 2 Behälter verwendet werden, die abwechselnd chargenweise versorgt werden, um eine für alle festen Ausgangsfragmente der Biomasse im Wesentlichen gleiche Reifungszeit zu gewährleisten.

10. Verfahren nach einem der vorhergehenden Ansprüche, wobei ein Strippen des Flüssig-Fest-Gemischs im Verlauf der Reifung mittels eines Gases durchgeführt wird, das verschieden von Wasserdampf ist, um eine zusätzliche Trocknung der wärmebehandelten festen Fragmente und vorzugsweise einen Restwassergehalt dieser Fragmente von weniger als 5 Gew.-% zu erhalten.

11. Verfahren nach einem der vorhergehenden Ansprüche, wobei in Schritt c) der restliche Feststoff im Gemisch mit einer Fraktion aus mindestens L2 gemahlen wird, um eine Suspension aus Restfeststoff in verteilter Form mit einer charakteristischen Abmessung von weniger als 100 Mikrometern, umfassend 40 Gew.-% bis 70 Gew.-% feste Teilchen, zu erhalten.

12. Verfahren nach einem der vorhergehenden Ansprüche, wobei in Schritt d) eine Teiloxidation POX mit Sauerstoff bei einer Temperatur im Bereich zwischen 1.250 °C und 1.400 °C durchgeführt wird.

13. Verfahren nach einem der vorhergehenden Ansprüche, wobei ein anschließender Schritt e) zur Umwandlung mindestens eines Teils des Synthesegases SG in Kohlenwasserstoffe durch Fischer-Tropsch-Reaktion durchgeführt wird.

14. Vorrichtung zur Durchführung des Verfahrens nach einem der vorhergehenden Ansprüche, umfassend:
- ein Mittel (2) zur Zufuhr von schwerem kohlenstoffhaltigem Material, das lignozellulosehaltige Biomasse umfasst, in ein Mittel zum Mahlen oder zum Zerkleinern der Biomasse in Form von festen Ausgangsfragmenten mit einer charakteristischen Abmessung im Bereich zwischen 1 und 20 mm, verbunden mit:
- einem Mittel (DRY) zum mindestens teilweisen Trocknen dieser festen Ausgangsfragmente, verbunden mit:
- einem Mittel (4) zum Einführen dieser mindestens teilweise getrockneten festen Ausgangsfragmente in einen Lagertank (5), der über ein Drei-Wege-Ventil (8) mit zwei Reifungsbehältern (10a, 10b) verbunden ist,
- Mittel (15a, 15b) zum Einführen einer Flüssigkeit L1, die mehr als 60 Gew.-% Kohlenstoff und Wasserstoff umfasst, in jeden dieser Behälter,
- Mittel (11a, 11b) zum Mischen von L1 mit diesen mindestens teilweise getrockneten festen Ausgangsfragmenten zum Erhalt eines mehrphasigen Gemisch, das mindestens ein Flüssig-Fest-Gemisch umfasst,
- für jeden der Reifungsbehälter (10a, 10b), Mittel (12a, 13a oder 12b, 13b) zum Umlauf im geschlossenen Kreis eines im Wesentlichen flüssigen Stroms, der aus dem Behälter entnommen, durch Mittel (14a oder 14b) zum Erwärmen extern erwärmt, dann wieder in diesen Behälter eingeführt wird, damit das Flüssig-Fest-Gemisch während einer Verweildauer von mindestens 10 Minuten auf einer Temperatur im Bereich zwischen 250 °C und 320 °C gehalten wird, um ein Gemisch aus wärmebehandelten festen Fragmenten in einer Flüssigkeit L2 und gegebenenfalls ein Gas G2 zu erhalten,
- Mittel (MILL) zum Zerkleinern der wärmebehandelten festen Fragmente im Gemisch mit einer Fraktion aus mindestens L2, um eine Feststoffsuspension in verteilter Form mit einer charakteristischen Abmessung von weniger als 150 Mikrometern zu erhalten, und
- Mittel zur teilweisen Oxidation (POX) im Flugstromreaktor mindestens einer Fraktion der Suspension aus Feststoff in verteilter Form zur Produktion eines Synthesegas SG.
